# EUROPEAN PATENT APPLICATION

(11) **EP 4 412 169 A1**
(43) Date of publication of application: **07.08.2024**
(21) Application number: 22885607.6
(22) Date of filing: 08.10.2022
(51) Int. Cl.: H04L 41/0695

(54) **NETWORK CONFIGURATION FEATURE EXTRACTION METHOD AND RELATED DEVICE**

(30) Priority: 29.10.2021 CN 202111276035
(71) Applicant: Huawei Technologies Co., Ltd., Shenzhen, Guangdong 518129 (CN)
(72) Inventor: WANG, Xin, Shenzhen, Guangdong 518129 (CN); YIN, Zhidong, Shenzhen, Guangdong 518129 (CN); GENG, Yue, Shenzhen, Guangdong 518129 (CN); XUE, Wei, Shenzhen, Guangdong 518129 (CN)
(74) Representative: Maiwald GmbH
(86) International application number: PCT/CN2022/123852
(87) International publication number: WO 2023/071725

(57) **Abstract**

Embodiments of this application provide a network configuration feature extraction method and a related apparatus. The method includes: obtaining a first configuration feature according to a preset rule and based on a network element configuration file, where the preset rule includes a first rule and a second rule, the first rule is used to extract a first configuration object and a second configuration object from the network element configuration file, the second rule includes a connection relationship between the first configuration object and the second configuration object, and the first configuration feature indicates parameter attributes and/or function attributes of the first configuration object and the second configuration object. In this application, information about a configuration object of a network element can be efficiently obtained, to implement efficient and accurate anomaly detection of a network configuration.

## Description

This application claims priority to Chinese Patent Application No. 202111276035.4, filed with the China National Intellectual Property Administration on October 29, 2021 and entitled "NETWORK CONFIGURATION FEATURE EXTRACTION METHOD AND RELATED APPARATUS", which is incorporated herein by reference in its entirety.

### TECHNICAL FIELD

The present invention relates to the field of communication technologies, and in particular, to a network configuration feature extraction method and a related apparatus.

### BACKGROUND

During online and service provisioning of a network element, various configuration commands need to be delivered to the network element, including some basic configurations, port configurations, protocol configurations, and various service configurations. Some of these configurations need to be manually completed. In a process of configuring the network element, a configuration error may occur due to various reasons, such as technical skills of service personnel and operation standardization. The configuration error of the network element may affect service quality and user experience, or even cause service interruption, which threatens stable operation of the network. Therefore, other methods are required to search for and correct the configuration error in time to eliminate potential risks.

Currently, a frequently-used configuration detection method is mainly to manually formulate check rules for various configurations. However, now, there are many types of network elements and a quantity of configuration objects of various network elements is huge. Therefore, using the manually formulated check rules to obtain the configuration objects one by one for detection requires a lot of program development and maintenance costs. Correctness of configurations can also be deduced based on information such as forwarding entries generated after the configurations are delivered. However, this configuration check method can cover only a few types of configurations.

In conclusion, how to efficiently obtain information of the configuration object of the network element to implement efficient and accurate anomaly detection of the network configuration is a problem that needs to be urgently resolved by persons skilled in the art.

### SUMMARY

This application discloses a network configuration feature extraction method and a related apparatus, to efficiently obtain information about a configuration object of a network element to implement efficient and accurate anomaly detection of a network configuration.

According to a first aspect, this application provides a network configuration feature extraction method, where the method includes:
obtaining a first configuration feature according to a preset rule and based on a network element configuration file, where the preset rule includes a first rule and a second rule, the first rule is used to extract a first configuration object and a second configuration object from the network element configuration file, the second rule includes a connection relationship between the first configuration object and the second configuration object, and the first configuration feature indicates parameter attributes and/or function attributes of the first configuration object and the second configuration object.

Optionally, the connection relationship includes a semantic connection relationship and/or a topology connection relationship. Optionally, the semantic connection relationship includes one or more of a reference relationship, a parameter matching relationship, a companion relationship, a logical operation matching relationship, a family commonality relationship, a collaboration relationship, and an inclusion relationship.

Optionally, the first rule may include a regular expression for extracting the first configuration object and the second configuration object.

Optionally, the configuration object may be a module configuration or a command configuration in the network element configuration file.

In this application, for a given preset rule, a to-be-detected configuration object is obtained from the network element configuration file, and then a configuration feature is constructed through the connection relationship between the configuration objects. The constructed configuration feature may be used to detect a configuration object that has an anomaly, to quickly detect a network implicit normative and logical configuration error, thereby reducing a network accident risk. In addition, in this application, a configuration feature of the configuration object is constructed based on the connection relationship to implement detection of a configuration anomaly. In addition to more accurately detecting whether content of the configuration object is abnormal, whether a parameter matching relationship between the configuration objects is abnormal may be further detected, that is, more comprehensive configuration anomaly detection may be implemented. In addition, the network configuration feature extraction method provided in this application can realize extraction of a configuration feature with relatively high network configuration consistency. For example, for networks in various networking forms such as an internet protocol radio access network (internet protocol radio access network, IPRAN), a packet transport network (packet transport network, PTN), or a data communication network (data communication network, DCN), configuration feature extraction may be implemented by using this application, and then configuration anomaly detection is performed based on the extracted configuration feature. It can be learned that an implementation of this application has relatively strong network adaptability and is applicable to a relatively wide scenario. In addition, compared with a solution in which check rules are manually formulated for various types of configurations in an existing implementation, this application does not need to pay a lot of program development and maintenance costs, thereby reducing implementation costs. In conclusion, in this application, the information about the configuration object of the network element can be obtained with a low cost and a high coverage, to implement efficient and accurate anomaly detection of the network configuration.

In a possible implementation, the first configuration feature includes values of parameter attributes and/or quantities of function attributes of the first configuration object and the second configuration object.

In this application, a value of the parameter attribute and a quantity of function attributes of the configuration object are used as configuration features for anomaly detection, so that a specific abnormal configuration object can be quickly and accurately detected.

In a possible implementation, the method further includes: obtaining a second configuration feature according to the preset rule and based on the network element configuration file, where the preset rule further includes a third rule and a fourth rule, the third rule is used to extract a third configuration object from the network element configuration file, the fourth rule includes a connection relationship between attributes of the third configuration object, and the second configuration feature indicates a parameter attribute and/or a function attribute of the third configuration object. Optionally, the connection relationship between the attributes of the configuration object may include a connection relationship between parameter attributes, a connection relationship between function attributes, and a connection relationship between a parameter attribute and a function attribute in the configuration object.

Optionally, the connection relationship between the attributes of the configuration object includes a semantic connection relationship between attributes of a same configuration object, and may include one or more of the reference relationship, the parameter matching relationship, the companion relationship, and the logical operation matching relationship.

In this application, a configuration feature may be further constructed through the connection relationship between the attributes of the configuration object. The constructed configuration feature is also used to detect a configuration object that has an anomaly, so that more comprehensive configuration anomaly detection can be implemented.

In a possible implementation, the method further includes: obtaining a plurality of configuration features according to the preset rule and based on the network element configuration file, where the plurality of configuration features include the first configuration feature; and obtaining a processing result based on the plurality of configuration features.

In this application, the plurality of configuration features may be extracted from the network element configuration file through the given preset rule, the plurality of configuration features are obtained based on a plurality of connection relationships, and then processing is performed based on the plurality of configuration features to obtain a final anomaly detection result, so that anomaly detection of batch configuration objects can be implemented, and efficiency of anomaly detection can be improved.

In a possible implementation, the obtaining a processing result based on the plurality of configuration features includes:
obtaining a first anomaly detection result based on an anomaly detection model and the plurality of configuration features.

In this application, the plurality of configuration features may be input into the anomaly detection model for detection, to obtain a detection result.

Optionally, the anomaly detection model may be a detection model that is constructed based on an isolation forest algorithm, a local outlier factor (local outlier factor, LOF) algorithm, or the like. Alternatively, the anomaly detection model may be, for example, a detection model that is constructed based on a deep learning (deep learning, DL) algorithm and that is trained in advance.

In a possible implementation, the obtaining a processing result based on the plurality of configuration features includes:
obtaining a classification result based on the plurality of configuration features, where the classification result includes one or more feature types.

In this application, before the anomaly detection is performed, the plurality of obtained configuration features are classified, and the anomaly detection is performed based on classified configuration features, so that accuracy and detection efficiency of the anomaly detection can be improved.

In a possible implementation, the obtaining a classification result based on the plurality of configuration features includes:
classifying the plurality of configuration features based on one or more topology connection relationships included in the preset rule, to obtain the one or more feature types, where the one or more topology connection relationships include a topology connection relationship of a network element involved in the network element configuration file in a network, and configuration features of a same connection relationship in the one or more topology connection relationships belong to a same feature type.

In this application, the configuration features are classified based on the topology connection relationship, so that configuration features of network element configurations with a same topology attribute (for example, a same network element role) can be classified into a same type. Because the network element configurations with the same topology attribute are the same or similar, classifying the network elements into the same type can help detect an abnormal configuration more accurately.

In a possible implementation, the obtaining a classification result based on the plurality of configuration features includes:
classifying the plurality of configuration features based on one or more semantic connection relationships included in the preset rule, to obtain the one or more feature types, where configuration features of a same connection relationship in the one or more semantic connection relationships belong to a same feature type.

In this application, the configuration features are classified based on the semantic connection relationship, so that the configuration features configured by the network elements in a same semantic connection relationship can be classified into a same type. Because the network elements in the same semantic connection relationship have the same or similar configurations, classifying the network elements into the same type can help detect an abnormal configuration more accurately.

In a possible implementation, the classification result includes a first feature type, and after the obtaining a classification result based on the plurality of configuration features, the method further includes:
determining, based on a threshold, whether a configuration object corresponding to a configuration feature included in the first feature type is abnormal, where that a quantity of configuration features included in the first feature type is less than the threshold indicates that the corresponding configuration object is abnormal, or that a quantity of configuration features included in the first feature type is greater than or equal to the threshold indicates that the corresponding configuration object is normal.

In this application, an abnormal configuration may be initially detected when configuration features are classified, so that a speed of the anomaly detection can be increased, and efficiency can be improved.

In a possible implementation, after the obtaining a classification result based on the plurality of configuration features, the method further includes:
separately performing anomaly detection based on configuration features of the one or more feature types in the classification result and an anomaly detection model, to obtain a second anomaly detection result.

In this application, the anomaly detection is performed based on the classified configuration features, so that the accuracy and the detection efficiency of the anomaly detection can be improved.

In a possible implementation, the method further includes:
generating a configuration template based on the first configuration object, the second configuration object, and the connection relationship between the first configuration object and the second configuration object.

In this application, a corresponding configuration template may be generated through existing network element configuration objects and connection relationships, so that when a network element of the same type is subsequently added to the network, a configuration operation of the newly added network element can be quickly completed based on the configuration template, thereby improving configuration efficiency.

In a possible implementation, the first configuration object and/or the second configuration object is a configuration object of a first network element, and the method further includes:
obtaining a second topology connection relationship, where the second topology connection relationship includes a topology connection relationship of a newly added network element in a target network, the target network is a network in which the network element involved in the network element configuration file is located, and the network element involved in the network element configuration file includes the first network element;
determining, based on the second topology connection relationship, that the newly added network element has a same function as the first network element; and
generating information about a configuration object of the newly added network element based on the configuration template.

In this application, configuration information of the newly added network element can be quickly generated through the configuration template, thereby helping improve the configuration efficiency of the network element.

According to a second aspect, this application provides a network configuration feature extraction apparatus, where the apparatus includes:
a processing unit, configured to obtain a first configuration feature according to a preset rule and based on a network element configuration file, where the preset rule includes a first rule and a second rule, the first rule is used to extract a first configuration object and a second configuration object from the network element configuration file, the second rule includes a connection relationship between the first configuration object and the second configuration object, and the first configuration feature indicates parameter attributes and/or function attributes of the first configuration object and the second configuration object.

In a possible implementation, the connection relationship includes a semantic connection relationship and/or a topology connection relationship.

In a possible implementation, the semantic connection relationship includes one or more of a reference relationship, a parameter matching relationship, a companion relationship, a logical operation matching relationship, a family commonality relationship, a collaboration relationship, and an inclusion relationship.

In a possible implementation, the first configuration feature includes values of the parameter attributes and/or quantities of function attributes of the first configuration object and the second configuration object.

In a possible implementation, the processing unit is further configured to:
obtain a second configuration feature according to the preset rule and based on the network element configuration file, where the preset rule further includes a third rule and a fourth rule, the third rule is used to extract a third configuration object from the network element configuration file, the fourth rule includes a connection relationship between attributes of the third configuration object, and the second configuration feature indicates a parameter attribute and/or a function attribute of the third configuration object.

In a possible implementation, the processing unit is further configured to:
obtain a plurality of configuration features according to the preset rule and based on the network element configuration file, where the plurality of configuration features include the first configuration feature; and
obtain a processing result based on the plurality of configuration features.

In a possible implementation, the processing unit is specifically configured to:
obtain a first anomaly detection result based on an anomaly detection model and the plurality of configuration features.

In a possible implementation, the processing unit is specifically configured to:
obtain a classification result based on the plurality of configuration features, where the classification result includes one or more feature types.

In a possible implementation, the processing unit is specifically configured to:
classify the plurality of configuration features based on one or more topology connection relationships included in the preset rule, to obtain the one or more feature types, where the one or more topology connection relationships include a topology connection relationship of a network element involved in the network element configuration file in a network, and configuration features of a same connection relationship in the one or more topology connection relationships belong to a same feature type.

In a possible implementation, the processing unit is specifically configured to:
classify the plurality of configuration features based on one or more semantic connection relationships included in the preset rule, to obtain the one or more feature types, where configuration features of a same connection relationship in the one or more semantic connection relationships belong to a same feature type.

In a possible implementation, the classification result includes a first feature type, and the processing unit is further configured to: after the obtaining a classification result based on the plurality of configuration features, determine, based on a threshold, whether a configuration object corresponding to a configuration feature included in the first feature type is abnormal, where that a quantity of configuration features included in the first feature type is less than the threshold indicates that the corresponding configuration object is abnormal, or that a quantity of configuration features included in the first feature type is greater than or equal to the threshold indicates that the corresponding configuration object is normal.

In a possible implementation, the processing unit is further configured to: after the obtaining a classification result based on the plurality of configuration features, separately perform anomaly detection based on configuration features of the one or more feature types in the classification result and an anomaly detection model, to obtain a second anomaly detection result.

In a possible implementation, the processing unit is further configured to:
generate a configuration template based on the first configuration object, the second configuration object, and the connection relationship between the first configuration object and the second configuration object.

In a possible implementation, the first configuration object and/or the second configuration object is a configuration object of the first network element; and the processing unit is further configured to:
obtain a second topology connection relationship, where the second topology connection relationship includes a topology connection relationship of a newly added network element in a target network, the target network is a network in which the network element involved in the network element configuration file is located, and the network element involved in the network element configuration file includes the first network element;
determine, based on the second topology connection relationship, that the newly added network element has a same function as the first network element; and
generate information about a configuration object of the newly added network element based on the configuration template.

According to a third aspect, this application provides an apparatus, including a processor and a memory, configured to implement the method described in the first aspect and the possible implementations of the first aspect. The memory is coupled to the processor, and when the processor executes a computer program stored in the memory, a network apparatus may be enabled to implement the method according to any one of the first aspect or the possible implementations of the first aspect.

The apparatus may further include a communication interface. The communication interface is configured for the apparatus to communicate with another apparatus. For example, the communication interface may be a transceiver, a circuit, a bus, a module, or another type of communication interface. The communication interface includes a receiving interface and a sending interface. The receiving interface is configured to receive a message, and the sending interface is configured to send a message.

In a possible implementation, the apparatus may include:
a memory, configured to store a computer program; and
a processor, configured to obtain a first configuration feature according to a preset rule and based on a network element configuration file, where the preset rule includes a first rule and a second rule, the first rule is used to extract a first configuration object and a second configuration object from the network element configuration file, the second rule includes a connection relationship between the first configuration object and the second configuration object, and the first configuration feature indicates parameter attributes and/or function attributes of the first configuration object and the second configuration object.

It should be noted that the computer program in the memory in this application may be pre-stored, or may be downloaded from the Internet and then stored when the apparatus is used. A source of the computer program in the memory is not specifically limited in this application. The coupling in this embodiment of this application is indirect coupling or connection between apparatuses, units, or modules for information exchange between the apparatuses, the units, or the modules, and may be in electrical, mechanical, or other forms.

According to a fourth aspect, this application provides a computer-readable storage medium, where the computer-readable storage medium stores a computer program, and when the computer program is executed by a processor, the method according to any one of the first aspect and the possible implementations of the first aspect is implemented.

According to a fifth aspect, this application provides a computer program product, including a computer program. When the computer program is executed by a processor, the computer is enabled to perform the method according to any implementation of the first aspect.

It may be understood that the apparatuses according to the second aspect and the third aspect, the computer storage medium according to the fourth aspect, and the computer program product according to the fifth aspect are all configured to perform the method according to any implementation of the first aspect. Therefore, for beneficial effects that can be achieved by the method, refer to beneficial effects in the corresponding method. Details are not described herein again.

### BRIEF DESCRIPTION OF DRAWINGS

The following briefly describes accompanying drawings that need to be used in embodiments of this application.
FIG. 1 is a schematic diagram of a network scenario according to this application;
FIG. 2 is a schematic flowchart of a network configuration anomaly detection method according to this application;
FIG. 3 is a schematic flowchart of a network configuration feature extraction method according to this application;
FIG. 4 is a schematic diagram of a logical structure of an apparatus according to this application; and
FIG. 5 is a schematic diagram of a hardware structure of an apparatus according to this application.

### DESCRIPTION OF EMBODIMENTS

The following describes embodiments of this application with reference to accompanying drawings.

Technical terms in embodiments of this application are first described.

### 1. Network element configuration file

A file that includes machine-readable operation specifications of hardware or software, or includes information about another file or information about a specific user (such as a login ID of the user). For example, in the field of computer science, a configuration file (configuration file) is a computer file, and may configure parameters and initial settings for some computer programs. The network element configuration file is the configuration file that is readable or executable by a network element in a network. After the network element executes the network element configuration file, the network element supports a network function corresponding to the network element configuration file, such as a routing function.

### 2. Configuration objects and attributes of the configuration objects

The network element configuration file includes one or more module configurations. A module configuration includes one or more configurations corresponding to the network function. For example, the configurations include a protocol configuration, an address configuration, an interface configuration, a process configuration, a routing configuration, a quality of service (quality of service, QoS) configuration, and the like. One or more of the foregoing module configurations may be presented through a command line (Command). The module configuration may include one or more command lines. A command line is also referred to as a command configuration. A command configuration may include a function attribute and/or a parameter attribute. The configuration object may be the module configuration, or the configuration object may be the command configuration included in the module configuration. The attribute of the configuration object is a function attribute and/or a parameter attribute included in the command configuration.

For example, details are as follows:
"
interface G0/0/1
ip address 173.185.129.53 255.255.255.252 "

The foregoing configurations are two command configurations in a module configuration, which are used to configure an internet protocol (internet protocol, IP) address under a G0/0/1 interface. If the configuration object is the module configuration, the module configuration is a configuration object A, "interface G0/0/1" is a sub-configuration object a1 of the configuration object A, and "ip address 173.185.129.53 255.255.255.252" is a sub-configuration object a2 of the configuration object A. If the configuration object is the command configuration in the module configuration, a configuration object B is "interface G0/0/1" and a configuration object C is "ip address 173.185.129.53 255.255.255.252". In the configuration object C, "ip address" is the function attribute, and "173.185.129.53 255.255.255.252" is the parameter attribute.

For another example, "ip binding vpn-instance 958" is a command configuration in a module configuration, and is used to configure a virtual private network (virtual private network, VPN) instance bound to an IP address. In this case, the "ip binding vpn-instance 958" may be a configuration object, or the module configuration can be configured as a configuration object. The command configuration of "ip binding vpn-instance 958" is a sub-configuration object of the configuration object. In this command configuration, "ip binding vpn-instance" is the function attribute, and "958" is the parameter attribute.

### 3. Connection relationship between the configuration objects and a connection relationship between the attributes of the configuration object

The connection relationship between the configuration objects includes a semantic connection relationship and/or a topology connection relationship between the configuration objects. The semantic connection relationship between the configuration objects refers to a connection relationship of semantic associations between a plurality of configuration objects or between attributes of a plurality of configuration objects, and may include one or more of a reference relationship, a parameter matching relationship, a companion relationship, a logical operation matching relationship, a family commonality relationship, a collaboration relationship, and an inclusion relationship.
(1) The reference relationship refers to a relationship in which a configuration object references the attributes of another configuration object. For example, the reference relationship is a reference relationship of the parameter attributes or the function attributes between the module configurations or the command configurations.
(2) The parameter matching relationship refers to a relationship in which the parameter attributes of a configuration object and those of another configuration object match each other. The parameter matching relationship is similar to the reference relationship. For example, the parameter matching relationship is a relationship in which the parameter attribute configured for an interface of a configuration object matches the parameter attribute configured for a protocol process of another configuration object.
(3) The companion relationship refers to a relationship that occurs together between the configuration objects, for example, a relationship that occurs together between an active path and a standby path. The companion relationship is not only a companion relationship between two configuration objects, but also a companion relationship between a plurality of configuration obj ects.
(4) The logical operation matching relationship refers to a relationship in which the parameter attributes between the configuration objects conform to some logical operation rules. For example, there is an "AND" logical relationship between IP address masks configured by the network elements at both ends of a link, such as, a mutually exclusive operation logical relationship between the active path and the standby path.
(5) The family commonality relationship refers to a relationship in which the configurations of the network elements with the same networking mode or the same function are consistent. For example, configurations of intermediate system to intermediate system (intermediate system to intermediate system, ISIS) processes of all network elements in a loop are consistent, and the quality of service (quality of service, QoS) configurations are the same.
(6) The collaboration relationship refers to a relationship that can be used normally only after cooperating to configure the configuration objects of the network elements is completed. For example, a cell site gateway (cell site gateway, CSG), an access service gateway (access service gateway, ASG), and a radio service gateway (radio service gateway, RSG) cooperate to complete configuration of the same route to get through.
(7) The inclusion relationship refers to a relationship in which a configuration object includes another configuration object, for example, an inclusion relationship between an aggregation route and a specific route.

The topology connection relationship indicates a specific physical connection relationship of the network element in the network. The topology connection relationship may include specific topology information of the network element, for example, may include information about a network element role, information about a link connection relationship of the network element in the network, information about a connection interface or a connection port of a network element link. The network element role is a role played by the network element in the network. For example, in a slicing packet network (slicing packet network, SPN), the network element role includes a role such as a user-end provider edge (user-end provider edge, UPE) device, a service provider-end provider edge (service provider-end provider edge, SPE) device, and a network provider-end provider edge (network provider-end provider edge, NPE) device.

The connection relationship between the attributes of the configuration object includes the semantic connection relationship between the attributes of the same configuration object. The semantic connection relationship between the attributes of the same configuration object refers to a connection relationship of the semantic associations between the attributes of the configuration object, and may include one or more of the reference relationship, the parameter matching relationship, the companion relationship, and the logical operation matching relationship.

Specifically, the reference relationship between the attributes of the configuration object refers to a relationship in which a configuration object references the attributes of the same configuration object. For example, the reference relationship is a reference relationship between the parameter attributes or the function attributes of the same configuration object.

The parameter matching relationship between the attributes of the configuration object refers to a relationship in which the parameter attributes of a configuration object and those of the same configuration object match each other. The parameter matching relationship is similar to the reference relationship. For example, the parameter matching relationship is a relationship in which the parameter attribute configured for an interface of a configuration object matches the parameter attribute configured for a protocol process.

The companion relationship between the attributes of the configuration object refers to a relationship that occurs together between the attributes of the same configuration object, for example, a relationship that occurs together between the active path and the standby path. The companion relationship is not only a companion relationship between two attributes, but also a companion relationship between a plurality of attributes.

The logical operation matching relationship between the attributes of the configuration object refers to a relationship in which the parameter attributes of the configuration object conform to some logical operation rules, for example, a mutually exclusive operation logical relationship between the active path and the standby path.

The foregoing connection relationship is merely an example, and does not constitute a limitation on this application.

### 4. Configuration feature

The configuration feature in this application is a feature extracted from the configuration objects based on the connection relationship between the configuration objects or the connection relationship between the attributes of the configuration objects. For example, there is a first object and a second object, and the first object may be a configuration object or may be an attribute in the configuration object. The second object may also be a configuration object or may be an attribute of the configuration object, and there is a first connection relationship between the first object and the second object. In this case, a first configuration feature may be extracted from the first object and the second object based on the first connection relationship. The first configuration feature indicates the parameter attributes and/or the function attributes of the first object and the second object.

For example, in a specific implementation, the first configuration feature may include values of the parameter attributes and/or quantities of function attributes of the first object and the second object.

Alternatively, for example, in another specific implementation, the first configuration feature may include names of the function attributes in the first object and the second object, and include the values of the parameter attributes and/or the quantities of function attributes of the first object and the second object.

Alternatively, the configuration feature may further include other information, for example, may include information indicating whether values of extracted parameter attributes are equal, or may include indication information indicating whether a VPN instance is referenced by an interface. This is not limited in this application.

### 5. Regular expression

A regular expression is a logical formula for operating on a character string (including ordinary characters (such as letters between a and z) and special characters (also known as metacharacters)). The regular expression is a "rule character string" including a combination of predefined special characters and these special characters. The "rule character string" is used to express a filtering logic for the character string. The regular expression is a text pattern. The pattern describes one or more character strings to match when searching for text.

In this application, a defined regular expression may be used to search the network element configuration file for configuration objects that require anomaly detection in a matching manner, and then these configuration objects are extracted from the configuration file.

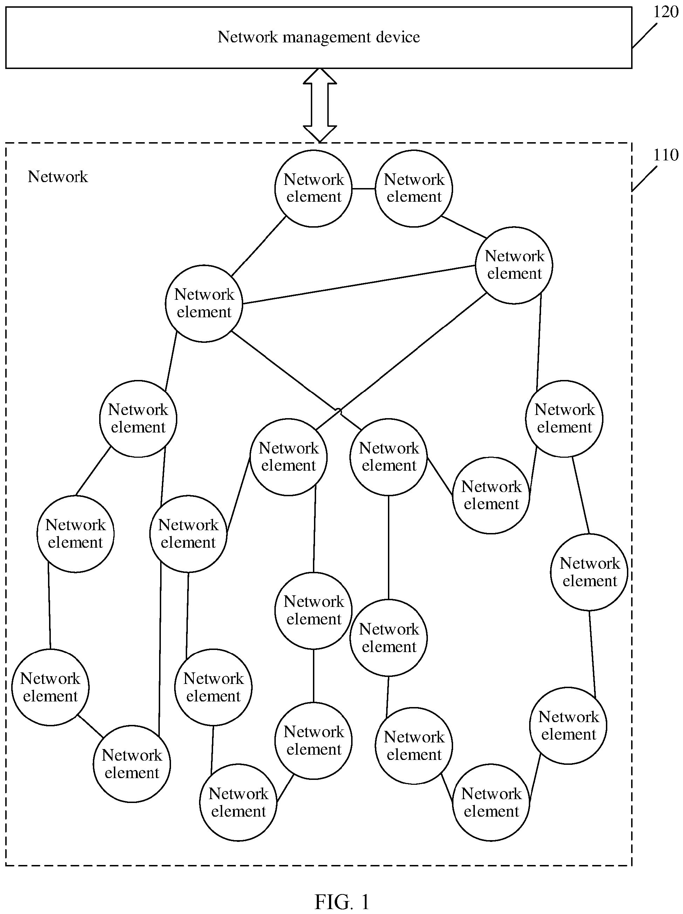

FIG. 1 shows a specific network application scenario to which an embodiment of this application is applicable. The scenario includes a network 110 and a network management device 120.

The network 110 includes a plurality of network elements. For example, the network may be a network of various networking forms such as an internet protocol radio access network (internet protocol radio access network, IPRAN), a packet transport network (packet transport network, PTN), or a data communication network (data communication network, DCN).

The network management device 120 may communicate with each network element in the network 110, and may obtain configuration information and the like of each network element. The network management device may be a software-defined network (software-defined network, SDN) controller, an operation and maintenance center (operation and maintenance center, OMC), a network management system (network management system), or the like.

It should be noted that the network scenario shown in FIG. 1 is merely an example, and does not constitute a limitation on this embodiment of this application.

To ensure that the network runs normally, the network elements in the network need to be configured. To prevent configuration errors, the anomaly detection can be performed on the configuration file of the network elements. Due to a large network system, a large quantity of network elements are formed, and the configuration information is complex, an existing solution cannot implement configuration anomaly detection with low costs and high coverage.

To implement the configuration anomaly detection with low costs and high coverage, an embodiment of this application provides a network configuration anomaly detection method. The method may be applied to the configuration anomaly detection of the network shown in FIG. 1.

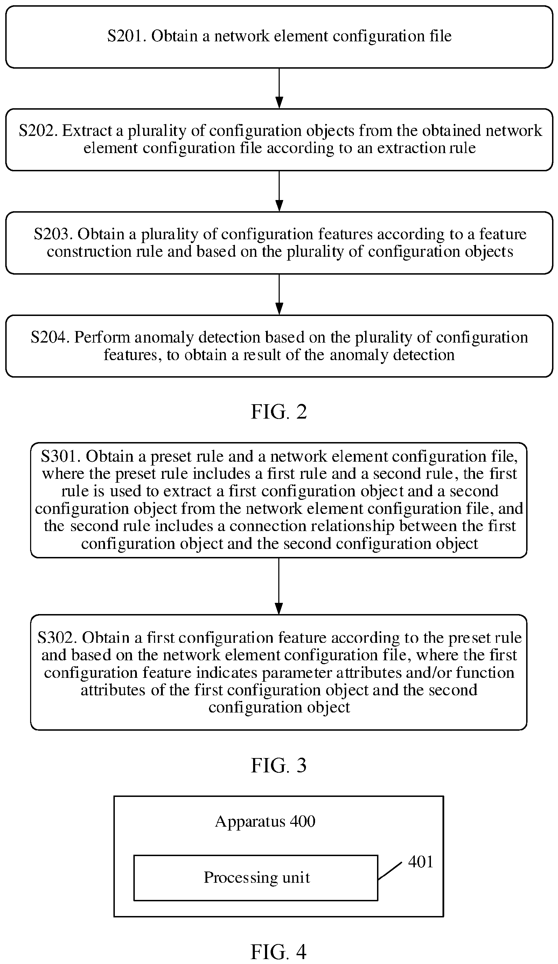

Referring to FIG. 2, a network configuration anomaly detection method provided in an embodiment of this application may include but is not limited to the following steps.

S201. Obtain a network element configuration file.

In a specific embodiment, the method may be executed by a configuration detection apparatus. The configuration detection apparatus may be the network management device 120 shown in FIG. 1, or a server or a device that may be independent of the network management device 120.

If the configuration detection apparatus is the network management device 120, the network management device 120 may obtain a configuration file of one or more network elements in the network 110.

If the configuration detection apparatus is the server or the device that is independent of the network management device 120, the server or the device may communicate with the network management device 120, and obtain the configuration file of one or more network elements in the network 110 from the network management device 120. Alternatively, the server or the device may receive, through an interaction interface, a network element configuration file or the like input by a user. A manner in which the server or the device obtains the network element configuration file is not limited in this embodiment of this application.

For example, the network configuration anomaly detection method in this application may be implemented by software or hardware. Specifically, if the method is implemented by the software, the software may be deployed in the foregoing configuration detection apparatus for running.

The obtained network element configuration file may be one or more network element configuration files. Optionally, each network element corresponds to one network element configuration file.

S202. Extract a plurality of configuration objects from the obtained network element configuration file according to an extraction rule.

For example, the extraction rule may include a regular expression for extracting the plurality of configuration objects, and the plurality of configuration objects may be extracted from the obtained configuration file through the regular expression. Alternatively, the extraction rule further includes a template extraction algorithm such as spell, Drain, or frequent pattern tree (frequent template tree, FT Tree). Parameter attributes and function attributes of the configuration objects in the network element configuration file may be distinguished first based on these extraction template algorithms, and then the plurality of configuration objects are extracted through the regular expression.

In a specific embodiment, the extraction rule may be a rule configured by default in the configuration detection apparatus. Alternatively, the extraction rule may be a rule input by the user and received by the configuration detection apparatus. Alternatively, some of the rules (for example, the foregoing template extraction algorithm such as spell, Drain, or FT Tree) in the extraction rule may be rules configured by default in the configuration detection apparatus, and another part of the rules (for example, the regular expression) may be rules input by the user and received by the configuration detection apparatus.

Optionally, that the configuration detection apparatus receives a rule input by a user may include: The configuration detection apparatus receives, through the interaction interface, an extraction rule input by the user. Alternatively, the configuration detection apparatus may communicate with a user terminal, and receive an extraction rule sent by the user terminal.

For ease of understanding the foregoing regular expression, the following examples are described.

Example 1: It is assumed that a first configuration object is:
"interface Tunnel1
destination 129.140.127.41".

It is assumed that a second configuration object is:
"ip route-static vpn-instance 736 0.0.0.0 0.0.0.0 static-vpn-peer 129.140.127.41 label 18
preference 90 description NCE_AUTO".

It is assumed that a third configuration object is:
"ipvpn-instance 736
ipv4-family
tunnel binding destination 129.140.127.41 Tunnel3".

The configuration of the first configuration object establishes a tunnel to the network element whose destination IP address is 129.140.127.41. The configuration of the second configuration object declares a default route to the destination IP address. The configuration of the third configuration object declares that a VPN instance is bound to the tunnel. In this case, the regular expression for matching the first configuration object in the network element configuration file may be "Interface Tunnel\d+\ndestination (.*)". That is, the network element configuration file is searched through the regular expression. Once there is an object that matches the regular expression in the configuration file, the object is matched. Similarly, regular expressions for matching the second configuration object and the third configuration object in the example are: "ip route-static vpn-instance \d+0.0.0.0 0.0.0.0 static-vpn-peer (.*?) label -u file" and "ipvpn-instance \d+\nipv4-family\n tunnel binding destination (.*?) Tunnel\d+ -u file" respectively. In the expression, -u file indicates that a record is generated for each network element configuration file.

Example 2: It is assumed that configuration of an interface module (referred to as a first configuration for short) is:
"interface 10GE2/0/1
ip address 173.185.129.53 255.255.255.252
ip binding vpn-instance 958".

Alternatively, the configuration of the interface module (referred to as a second configuration for short) is:
"interface 10GE2/0/1
ip address 173.185.129.53 255.255.255.252
isis enable 6001".

The configuration of the entire interface module may be considered as a configuration object, or each command configuration in the interface module may be considered as a configuration object. The command configuration "ip address 173.185.129.53 255.255.255.252" is used to configure an IP address for an interface 10GE2/0/1. The command configuration "ip binding vpn-instance 958" is used to configure a bound VPN instance for the interface 10GE2/0/1. The command configuration "isis enable 6001" is used to configure a corresponding ISIS protocol for the interface 10GE2/0/1.

In the network element configuration file, the regular expression for matching the IP address of the interface module may be "interface (?:(?:GigabitEthernet\d+/\d+/\d+)|(?:\d+GE\d+/\d+/\d+)|(?:Ethernet\d+/\d+/\d+)|(?:FlexE\d+/\d+/\ d+))\nip address .*?". The regular expression for matching a VPN instance configuration in the interface module may be "interface (?:(?:GigabitEthernet\d+/\d+/\d+)|(?:\d+GE\d+/\d+/\d+)|(?:Ethernet\d+/\d+/\d+)|(?:FlexE\d+/\d+/\ d+))\nip binding vpn-instance .*?". The regular expression for matching the ISIS protocol configuration in the interface module may be "interface (?:(?:GigabitEthernet\d+/\d+/\d+)|(?:\d+GE\d+/\d+/\d+)|(?:Ethernet\d+/\d+/\d+)|(?:FlexE\d+/\d+/\ d+))\nisis enable .*?‴.

Example 3: It is assumed that a first configuration object is:
"interface 10GE2/0/4.1
ip address 10.100.109.69 255.255.255.252
ip binding vpn-instance 859".

The second configuration object is:
"ip route-static vpn-instance 859 10.100.109.69 255.255.255.252 NULL0 preference 180".

The first configuration object is configured with an IP address of a service-side interface 10GE2/0/4.1 and the bound VPN instance, and the second configuration object is configured with a black hole route corresponding to the service interface.

The regular expression for matching the IP address in the first configuration object in the network element configuration file may be "interface .*/n ip address (.*?) (.*) -1 and-u module". The regular expression for matching the VPN instance configuration in the first configuration object may be "interface .*/n ip binding vpn-instance \d+-u module". The regular expression for matching the second configuration object may be "ip route-static vpn-instance \d+(.*?) (.*?) NULL0 preference \d+ -l and -u module". In the regular expression, "-u module" indicates that each module is extracted. The parameter "-1 and" is used to perform an "AND" calculation on the extracted IP address and mask to calculate a corresponding network segment.

Example 4: It is assumed that a first configuration object is:
"106-PTN970-50GE access ring 7-CRAN-1
interface 10GE2/0/3
ptp port-state primary master
ptp enable".

The second configuration object is:
"578-PTN980-50GE access ring 7-CRAN
interface 10GE4/0/8
clock synchronization enable
ptp enable".

The first configuration object is configuration on a source device port, and the second configuration object is configuration on a sink device port. As shown in the preceding figure, the two configuration objects do not have configuration of the parameter attributes but have configuration of the function attributes. "ptp port-state primary master" indicates that time synchronization is in a master state. In this state, the interface only transmits time information to a peer end, and does not obtain time information from a peer end. "ptp enable" enables a function of the time synchronization. "clock synchronization enable" enables clock frequency to be obtained from the peer end.

In the network element configuration file, the regular expression for matching the configuration of enabling the clock frequency to be obtained from the port in the configuration object may be "clock synchronization enable -u module". The regular expression for matching the configuration indicating that the time synchronization is in the master state in the configuration object may be "ptp port-state primary master -u module". The regular expression for matching the configuration of enabling the function of the time synchronization in the configuration object may be "ptp enable -u module".

The foregoing regular expression is merely an example, and does not constitute a limitation on this application.

S203. Obtain a plurality of configuration features according to a feature construction rule and based on the plurality of configuration objects.

The feature construction rule includes a connection relationship between the plurality of configuration objects, where the connection relationship may be a connection relationship between the plurality of configuration objects, and/or the connection relationship may be a connection relationship between attributes of the configuration objects. The connection relationship may include a semantic connection relationship and/or a topology connection relationship. For detailed descriptions of the semantic connection relationship and the topology connection relationship, refer to the foregoing descriptions. Details are not described herein again.

In a specific embodiment, the feature construction rule may be a rule configured by default in the foregoing configuration detection apparatus. Alternatively, the feature construction rule may be a rule that is input by the user and that is received by the configuration detection apparatus. For example, that the configuration detection apparatus receives the feature construction rule input by the user may include: The configuration detection apparatus receives, through the interaction interface, the feature construction rule input by the user. Alternatively, the configuration detection apparatus may communicate with the user terminal, and receive the feature construction rule sent by the user terminal. Optionally, the feature construction rule and the foregoing extraction rule may be obtained at the same time, or may be obtained separately. This is not limited in this application.

For example, to facilitate understanding of the foregoing feature construction rule, the following uses an example for description.

For example, in Example 1, the second configuration object and the third configuration object reference values of the parameter attributes in the first configuration object, that is, reference the destination IP address 129.140.127.41. In addition, both the second configuration object and the third configuration object include the destination IP address. In this case, the third configuration object references the destination IP address of the second configuration object. That is, there is a reference relationship between every two of the first configuration object, the second configuration object, and the third configuration object. In this case, the feature construction rules corresponding to the three configuration objects include information about the reference relationship, and the information indicates that a connection relationship existing between every two of the three configuration objects is the reference relationship. Optionally, the information about the reference relationship may be provided when the extraction rules of the three configuration objects are provided. For example, the information about the reference relationship may be represented as "consistency" or another character. This is not limited in this application.

For example, in Example 2, in the configuration of the interface module, the VPN instance or the ISIS protocol can be configured only after the IP address is configured, but the VPN instance and the ISIS protocol cannot be configured together. Therefore, the IP address configuration of the interface and the VPN instance configuration, or the IP address configuration of the interface and the ISIS protocol configuration belong to a companion relationship. In this case, the feature construction rule corresponding to the configuration object in the configuration of the interface module includes information about the companion relationship. Optionally, the information about the companion relationship may be provided when the extraction rule of the configuration object is provided. For example, the information about the companion relationship may be represented as "Companion" or another character. This is not limited in this application.

For example, in Example 3, the corresponding network segment can be calculated based on the IP address "10.100.109.69" and the mask "255.255.255.252" in the configuration object. The IP addresses of the service-side interface and the black hole route corresponding to the service-side interface need to be on the same network segment. In this case, the network segment obtained by calculating the IP address and the mask in the first configuration object is required to be equal to the network segment obtained by calculating the IP address and the mask in the second configuration object. That is, a logical operation matching relationship exists between the first configuration object and the second configuration object or between the attributes of the first configuration object and the second configuration object. In this case, the feature construction rules corresponding to the two configuration objects include information about the logical operation matching relationship, and the information indicates that a connection relationship existing between the two configuration objects is the logical operation matching relationship. Optionally, the information about the logical operation matching relationship may be provided while the extraction rule of the two configuration objects is provided. For example, the information about the logical operation matching relationship may be represented as "logic" or another character. This is not limited in this application.

For example, in Example 4, if a topology connection relationship exists between the first configuration object and the second configuration object, the feature construction rule corresponding to the two configuration obj ects includes information about the topology connection relationship, and the information indicates that the connection relationship existing between the two configuration objects is the topology connection relationship. Optionally, the information about the topology connection relationship may be provided while the extraction rule of the two configuration objects is provided. For example, the information about the topology connection relationship may be represented as another character such as "Topo" or "topology". This is not limited in this application.

Based on the foregoing description, after the connection relationship between the configuration objects is determined, the configuration detection apparatus may extract, based on the connection relationship, a feature from a corresponding configuration object to generate a corresponding configuration feature. For the plurality of extracted configuration objects, a plurality of configuration features may be correspondingly generated based on the plurality of connection relationships in the feature construction rule. For a definition of the configuration feature, refer to the description in the fourth point of the configuration feature in the description of the foregoing technical terms. For ease of understanding, the following uses an example in which the configuration feature includes values of the parameter attributes and/or a quantity of function attributes of the configuration object. For example, the following lists examples of configuration features extracted based on the foregoing several connection relationships.

### (1) Example of extracting the configuration feature based on the reference relationship

For Example 1, based on the description of Example 1, it can be learned that there is a reference relationship between every two of the first configuration object, the second configuration object, and the third configuration object. After knowing that the second configuration object and the first configuration object have the reference relationship, the third configuration object and the first configuration object have the reference relationship, and the second configuration object and the third configuration object have the reference relationship, a configuration feature of the reference relationship may be extracted from the three configuration objects, where the configuration feature may be, for example, expressed as: { value: 129.140.127.41, feature1:1, feature2:1, feature3:1}.

The value value is a value of the referenced parameter attribute, that is, the destination IP address.

feature1 represents a function attribute "destination" in the first configuration object, that is, represents a destination address of a tunnel. Because the function attribute appears only once in the configuration object corresponding to the reference relationship, a value corresponding to feature1 is 1, that is, it indicates that a quantity of the "destination" function attributes is one.

feature2 represents a function attribute "static-vpn-peer" in the second configuration object, that is, represents an IP address of a static route. Because the function attribute appears only once in the configuration object corresponding to the reference relationship, a value corresponding to feature2 is 1, that is, it indicates that a quantity of the "static-vpn-peer" function attributes is one.

features represents a function attribute "tunnel binding destination" in the third configuration object, that is, represents a destination IP address bound to the tunnel. Because the function attribute appears only once in the configuration object corresponding to the reference relationship, a value corresponding to features is 1, that is, it indicates that a quantity of the "tunnel binding destination" function attributes is one.

Alternatively, optionally, the configuration feature may be, for example, represented as: {value:129.140.127.41, destination:1, static-vpn-peer:1, tunnel binding destination:1}. A meaning of the configuration feature indicated is the same as that described above, and details are not described again.

In addition, extraction of the configuration feature based on a parameter matching relationship is similar to the foregoing extraction of the configuration feature based on the reference relationship. For details, refer to the foregoing description of extracting the configuration feature based on the reference relationship. Details are not described herein again.

### (2) Example of extracting the configuration feature based on the companion relationship.

For Example 2, based on the description of Example 2, it can be learned that: the IP address configuration of the interface and the VPN instance configuration, or the IP address configuration of the interface and the ISIS protocol configuration belong to the companion relationship.

In a specific implementation, if each command configuration in the interface module is considered as a configuration object, the companion relationship between the IP address configuration of the interface and the VPN instance configuration, or between the IP address configuration of the interface and the ISIS protocol configuration may be referred to as the companion relationship between the configuration objects.

Based on the companion relationship, the IP address of the interface, the VPN instance bound to the interface, and the ISIS protocol corresponding to the interface may be used as three features to extract the configuration feature. Therefore, for the first configuration, the extracted configuration feature may be represented as {feature1:1, feature2:1, feature3:0}.

feature1 represents a function attribute "ip address", that is, represents an IP address of an interface. Because the function attribute appears only once in the first configuration corresponding to the companion relationship, a value corresponding to feature1 is 1, that is, it indicates that a quantity of the "ip address" function attributes is one in the first configuration.

feature2 represents a function attribute "ip binding vpn-instance", that is, represents a VPN instance bound to the interface. Because the function attribute appears only once in the first configuration corresponding to the companion relationship, a value corresponding to feature2 is 1, that is, it indicates that a quantity of function attribute "ip binding vpn-instance" is one in the first configuration.

features represents a function attribute "isis enable", that is, represents the ISIS protocol corresponding to the interface. Because the function attribute does not appear in the first configuration corresponding to the companion relationship, a value corresponding to features is 0, that is, it indicates that a quantity of function attribute "isis enable" is zero in the first configuration.

Similarly, for the second configuration, the extracted configuration feature may be represented as {feature 1:1, feature2:0, feature3:1}, where feature1, feature2, and features are the same as the configuration features obtained for the first configuration, and meanings of values corresponding to feature1, feature2, and features are also the same. For details, refer to the foregoing descriptions. Details are not described again.

Alternatively, in another specific implementation, if the configuration of the entire interface module is considered as a configuration object, the companion relationship between the IP address configuration of the interface and the VPN instance configuration, or between the IP address configuration of the interface and the ISIS protocol configuration may be referred to as the companion relationship between attributes of the configuration object.

Then, using the foregoing first configuration as an example, based on the companion relationship between the attributes of the configuration object, the IP address of the interface and the VPN instance bound to the interface may be used as a feature to extract the configuration feature, and the extracted configuration feature may be represented as {feature1:1, feature2: 1}. The meanings of feature1 and feature2 and their values are the same as those described above. Similarly, the configuration feature extracted from the second configuration may be represented as {feature1:1, feature2: 1}. Meanings represented by feature1 and the value of feature1 in the configuration feature are the same as those described in the description of feature1, and meanings represented by feature2 and the value of feature2 are the same as those described in the description of features, that is, feature2 represents a function attribute "isis enable".

Optionally, the configuration feature extracted based on the companion relationship may also include a value of a corresponding parameter attribute, which is specifically determined based on an actual situation. This is not limited in this application.

### (3) Example of extracting the configuration feature based on the logical operation matching relationship.

For Example 3, based on the description of Example 3, it can be learned that a logical operation matching relationship exists between the first configuration object and the second configuration object, or between the attributes of the first configuration object and the second configuration object.

Based on the logical operation matching relationship, the configuration features obtained from the first configuration object and the second configuration object may be represented as {feature1:1, feature2:10.100.109.68, feature3:10.100.109.68}.

feature1:1 indicates that the configuration that the interface is the service-side interface is extracted.

feature2:10.100.109.68 is the network segment to which the service interface belongs, which is calculated based on the IP address and the mask extracted from the first configuration obj ect.

feature3:10.100.109.68: indicates the network segment to which the IP address of the black hole route belongs, which is calculated based on the IP address and mask extracted from the second configuration object.

If values of feature2 and features are the same, it indicates that the configuration in the logical operation matching relationship is normal. If values of feature2 and features are different, it indicates that the configuration in the logical operation matching relationship is abnormal.

### (4) Example of extracting the configuration feature based on the topology connection relationship.

It is assumed that topology information of the topology connection relationship includes the following content:

| Source device | Source device port | Sink device | Sink device port |
|---|---|---|---|
| 106-PTN970-50GE access ring 7-CRAN-1 | 10GE2/0/3 | 578-PTN980-50GE access ring 7-CRAN | 10GE2/0/3 |

Based on the topology information, the corresponding configuration object may be extracted from the corresponding network element configuration file. For the extracted configuration object, refer to the first configuration object and the second configuration object in Example 4.

Based on the topology connection relationship between the first configuration object and the second configuration object, the configuration feature extracted from the first configuration object and the second configuration object may be expressed as {feature0:0, feature 1: 1, feature2:1, feature3 :1, feature4:0, feature5:1}.

feature0 to feature2 are configuration features of the source device port, that is, the configuration features of the first configuration object. feature3 to features are configuration features of the sink device port, that is, the configuration features of the second configuration obj ect.

feature0:0 indicates that the source device port does not obtain the clock frequency from the sink device port.

feature 1: 1 indicates that the time synchronization of the source device port is in the master state.

feature2:1 indicates that the time synchronization can be performed on the source device port.

feature3:1 indicates that the sink device port obtains the clock frequency from the source device port.

feature4:0 indicates that the sink device port is not in the master state.

feature5:1 indicates that the time synchronization can be performed on the sink device port.

The foregoing examples of extracted configuration features do not constitute a limitation on this application. In addition, there is an implementation of extracting a configuration feature based on another connection relationship. The examples are not listed one by one in this application.

S204. Perform anomaly detection based on the plurality of configuration features, to obtain a result of the anomaly detection.

In a specific implementation, after obtaining the plurality of configuration features, the configuration detection apparatus may input the plurality of configuration features into an anomaly detection model for detection, to obtain an anomaly detection result.

For example, the anomaly detection model may be, for example, a detection model that is constructed based on an isolation forest algorithm, a local outlier factor (local outlier factor, LOF) algorithm, or the like. Alternatively, the anomaly detection model may be, for example, a detection model that is constructed based on a deep learning (deep learning, DL) algorithm and that is trained in advance.

The basic theoretical basis of the isolation forest algorithm is as follows: A proportion of abnormal data to a total sample size is small. Feature values of abnormal points are greatly different from those of normal points. That is, abnormal samples can be isolated by fewer random feature segmentations than ordinary samples.

For the foregoing LOF algorithm, if each of the plurality of configuration features is considered as a point in coordinates, the LOF algorithm mainly determines whether the point is an abnormal point by comparing density of each point p with density of neighbor points of the point p. If the density of the point p is lower, the point is more likely to be determined as the abnormal point. The density is calculated by a distance between points. A longer distance between points indicates a lower density, and a shorter distance indicates a higher density. In addition, because the calculation of the density by the LOF is calculated by the neighbor points of the point p, rather than by global points, so that the normal points are not incorrectly determined as the abnormal points due to different distribution of data density. Therefore, the LOF is named as the "local" outlier factor.

Specifically, an abnormal configuration feature in the plurality of configuration features may be detected through the anomaly detection model, to determine that a configuration object corresponding to the abnormal configuration feature is abnormal.

In another specific implementation, before the plurality of configuration features are input into the anomaly detection model for the anomaly detection, the plurality of configuration features may be further first classified to obtain one or more feature types, and then the anomaly detection is performed based on the feature types.

In a specific embodiment, the constructed configuration feature may be classified by using a clustering algorithm, and the constructed configuration feature may be classified into a plurality of feature types through the clustering algorithm. The clustering algorithm may be, for example, a K-means (K-Means) clustering algorithm, a mean drift clustering algorithm, a density-based clustering method, or a condensation hierarchical clustering algorithm. Specific classification of the configuration features may include a plurality of classification manners, which are described in the following examples.

In a classification manner 1, the classification is performed based on module configurations, the function attributes, or the parameter attributes.

Specifically, if the classification is performed based on the module configurations, configuration features corresponding to module configurations that implement a same function may be classified into a same type, and configuration features corresponding to module configurations that implement different functions may be classified into different types. For example, configuration features corresponding to a communication tunnel configuration module are classified into a same type, and configuration features respectively corresponding to the communication tunnel configuration module and an Ethernet link aggregation (Eth-Trunk) configuration module are classified into different types.

If the classification is performed based on the function attributes, configuration features corresponding to a same function attribute may be classified into a same type, and configuration features corresponding to different function attributes are classified into different types. For example, configuration features including a function attribute being an IP address are classified into a same type, and configuration features excluding the function attribute being the IP address are classified into another type.

If the classification is performed based on the parameter attributes, configuration features corresponding to a same parameter attribute may be classified into a same type, and configuration features corresponding to different parameter attributes are classified into different types. For example, configuration features including a parameter attribute "192.168.0.1" are classified into a same type, and configuration features excluding the parameter attribute "192.168.0.1" are classified into another type.

In a classification manner 2, the classification is performed based on the semantic connection relationship.

Specifically, the feature construction rule in S203 may include a plurality of semantic connection relationships, for example, a companion relationship, a reference relationship, or a family commonality relationship. Therefore, configuration features corresponding to a same semantic connection relationship may be classified into a same type, and configuration features corresponding to different semantic connection relationships are classified into different types. For example, using the companion relationship and the reference relationship as examples, configuration features generated based on the companion relationship may be classified into a same type, and configuration features generated based on the reference relationship may be classified into another type.

In a classification manner 3, the classification is performed based on the topology connection relationship.

It can be learned from the foregoing description of the topology connection relationship that, the topology connection relationship may include the information about the network element role, the information about the link connection relationship of the network element in the network, the information about the connection interface or the connection port of the network element link. In this case, specifically, the classification may be performed based on the plurality of pieces of information. For example, using the network element role as an example, configuration features corresponding to a same network element role are classified into a same type, and configuration features corresponding to different network element roles are classified into different types. For example, if the topology connection relationship includes information about a loop network topology, the loop network topology includes a plurality of network elements. Because the network elements on a loop have the same role and have a consistent configuration, that is, network element configurations on the loop are basically the same, the configuration detection apparatus may classify configuration features corresponding to all network elements on the loop into a same type.

The classification manners described above does not constitute a limitation on this application. In a specific implementation, the configuration features may be further classified in another classification manner. This is not limited in this application.

In a specific implementation, for the plurality of feature types obtained through the classification, if a quantity of configuration features included in a feature type is greater than or equal to a threshold, the feature type belongs to a large category. If the quantity of configuration features included in the feature type is less than the threshold, the feature type belongs to a sub-category. It is clear that the configuration feature of the sub-category is different from the configuration feature of another category. Therefore, it can be determined that the configuration feature of the sub-category is abnormal, and then it is determined that the configuration object corresponding to the configuration feature of the sub-category is abnormal.

In another specific implementation, for the foregoing sub-classification, whether the sub-classification is abnormal may not be determined first, but the sub-classification is further classified into another large classification, and then the anomaly detection is performed on the configuration features in each large category by using the foregoing anomaly detection model. For example, assuming that three large categories are finally obtained through the classification, the anomaly detection is separately performed on a first large category, a second large category, and a third large category by using the foregoing anomaly detection model, and finally anomaly detection results corresponding to each large category are separately output. For detailed descriptions of performing the anomaly detection by using the anomaly detection model, refer to the foregoing corresponding descriptions. Details are not described herein again.

In a specific embodiment, if a configuration feature extracted based on a normal configuration object meets a rule, a configuration feature detected in an anomaly detection process that does not meet the rule is an abnormal configuration feature, and the configuration object corresponding to the abnormal configuration feature is abnormal. For ease of understanding, the following examples are used to illustrate.

For example, for the example (1) of extracting the configuration feature based on the reference relationship, in the configuration feature extracted based on the reference relationship, values of feature1, feature2, and features are all 1. In this case, the configuration object has function attributes corresponding to the three features, which indicates that the configuration in the reference relationship is normal. If at least one of the three features has a value other than 1, at least one of the function attributes corresponding to the three features in the configuration object does not exist, which indicates that the configuration in the reference relationship is abnormal.

For example, for the example (2) of extracting the configuration feature based on the companion relationship, in the foregoing described companion relationship between the configuration objects, in the configuration feature extracted based on the companion relationship, and based on a rule that "the VPN instance or the ISIS protocol can be configured only after the IP address is configured, but the VPN instance and the ISIS protocol cannot be configured together", only when the extracted configuration feature belongs to any of three features {feature1:0, feature2:0, features :0}, {feature1:1, feature2:1, feature3:0}, and {feature1:1, feature2:0, feature3:1}, it indicates that the configuration in the companion relationship is normal; otherwise, the configuration in the companion relationship is abnormal. In addition, in the foregoing described companion relationship between the attributes of the configuration object, two configuration features extracted based on the companion relationship between the attributes of the configuration object are abnormal as long as values of the two features in the configuration features are different, and are normal as long as values of the two features are the same.

For example, for the example (3) of extracting the configuration feature based on the logical operation matching relationship, if values of feature2 and features are the same, it indicates that the configuration in the logical operation matching relationship is normal. If values of feature2 and features are different, it indicates that the configuration in the logical operation matching relationship is abnormal.

For example, for the example (4) of extracting the configuration feature based on the topology connection relationship, for example, in the configuration feature extracted based on the topology connection relationship, the time synchronization of the source device port is in the master state, which indicates that the sink device port needs to obtain the time synchronization from the source device port, but a prerequisite for the time synchronization is clock frequency synchronization. Therefore, the sink device port needs to obtain a clock frequency from the source device port to perform the time synchronization. Therefore, when the value of feature1 is 1, the value of features is also 1, which is normal. If the value of feature1 is 1, the value of features is 0, which is abnormal.

It should be noted that the foregoing description of determining the configuration anomaly is merely an example, and does not constitute a limitation on this application.

In a specific implementation, for the foregoing configuration anomaly detection after the classification, the configuration detection apparatus may separately calculate a respective confidence interval for each of the plurality of feature types obtained through the classification. Then, it is determined whether a configuration feature in a corresponding feature type meets a confidence interval requirement of the feature type. If the configuration feature meets the confidence interval requirement, it is normal. If the configuration feature does not meet the confidence interval requirement, it is abnormal. For example, a first type of the plurality of feature types is used as an example. Based on the foregoing description, it can be learned that the extracted configuration feature includes values of the parameter attributes and/or a quantity of function attributes. Therefore, an average value and a standard deviation of all configuration features in a feature type may be calculated. The confidence interval of the feature type is calculated based on the average value and the standard deviation. Then, for configuration features in the feature type, a value of each configuration feature may be compared with the confidence interval. If the value of the configuration feature is within the confidence interval, the configuration is normal. Otherwise, the configuration is abnormal.

In a specific embodiment, to facilitate configuration of a newly added network element in a subsequent network and improve configuration efficiency of the newly added network element, a corresponding configuration template may be generated based on existing configuration objects and a connection relationship between the configuration objects, and the configuration template is saved for reference for subsequent configuration of the newly added network element.

In a specific implementation, because the plurality of configuration objects have been extracted from the network element configuration file, and the connection relationship existing in the plurality of configuration objects may be learned from the feature construction rule, the configuration template may be generated based on the plurality of configuration objects and the connection relationship in the feature construction rule. For example, the generated configuration template may be a configuration template of attributes in a configuration object, or a configuration template of a configuration object, or a configuration template of a network element configuration file.

Specifically, the configuration template of the attributes in the configuration object may include information about a corresponding attribute and information about a connection relationship between the attribute and other attributes. The other attributes may be other attributes in a same configuration object, or may be other attributes in different configuration objects.

The configuration template of the configuration object may include information about one or more attributes of the corresponding configuration object and information about a connection relationship between the configuration object and other configuration objects. The other configuration objects may be other configuration objects in the same network element configuration file, or may be other configuration objects in different network element configuration files.

The configuration template of the network element configuration file may include information about one or more configuration objects in the corresponding network element configuration file.

In another specific implementation, after the configuration detection apparatus classifies the configuration features into the plurality of feature types through the clustering algorithm, for each feature type in the plurality of feature types, the configuration detection apparatus may extract, from the obtained network element configuration file, configuration objects corresponding to the configuration feature in each feature type. In addition, the configuration detection apparatus records the connection relationship between the extracted configuration objects. Then, a configuration template corresponding to each feature type is generated based on the connection relationship between the extracted configuration obj ects and the record. Similarly, the generated configuration template may be a configuration template of attributes in a configuration object, or a configuration template of a configuration object, or a configuration template of a network element configuration file. For descriptions of these configuration templates, refer to the above introduction. Details are not described herein again.

In a specific embodiment, after generating the configuration template, the configuration detection apparatus may save the generated configuration template for configuration reference and configuration recommendation of a subsequently added network element. For example, the configuration template may be saved based on different network element roles and/or different functions. For example, corresponding configuration templates are saved based on network element roles CSG and ASG respectively. Respective configuration templates are saved based on function modules such as isis and interface.

In a specific implementation, when a topology of a network in which the network element involved in the network element configuration file is located changes, for example, a network element is added, the configuration detection apparatus may obtain a topology connection relationship after the network changes. The topology connection relationship includes a topology connection relationship of the newly added network element in the network. Then, a network element having a same function as the newly added network element is found based on the topology connection relationship of the newly added network element in the network. In addition, a configuration template corresponding to the network element is matched in a database storing the configuration templates based on the found network element, so that information about the configuration object of the newly added network element may be generated based on the configuration template.

For example, assuming that the newly added network element is a network element in a loop, the configuration detection apparatus may find an original network element in the loop based on the new topology connection relationship, and find a configuration template corresponding to the original network element from the configuration template database. The configuration detecting apparatus may generate configuration information of the newly added network element based on the configuration template. For example, assuming that the configuration of the original network element in the found configuration template includes configuration in which an interface tunnel destination (interface tunnel destination) is 192.168.0.1, configuration generated for the newly added network element may be the configuration in which the interface tunnel destination is 192.168.0.1.

Based on the foregoing description, an embodiment of this application further provides a network configuration feature extraction method. For example, referring to FIG. 3, the method includes but is not limited to the following steps.

S301: Obtain a preset rule and a network element configuration file, where the preset rule includes a first rule and a second rule, the first rule is used to extract a first configuration object and a second configuration object from the network element configuration file, and the second rule includes a connection relationship between the first configuration object and the second configuration object.

S302: Obtain a first configuration feature according to the preset rule and based on the network element configuration file, where the first configuration feature indicates parameter attributes and/or function attributes of the first configuration object and the second configuration obj ect.

In a specific implementation, for the first rule, refer to the description of the extraction rule in step S202 in FIG. 2, and for the second rule, refer to the description of the feature construction rule in step S203 in FIG. 2. The first configuration obj ect and the second configuration object may be objects in the plurality of configuration objects in step S202 in FIG. 2. The first configuration feature may be a feature in the plurality of configuration features in step S203 in FIG. 2. Specifically, for specific implementations of steps S301 and S302, refer to corresponding descriptions in steps S201, S202, and S203 in FIG. 2. Details are not described herein again.

In a specific implementation, the network configuration feature extraction method may further include: obtaining a second configuration feature according to the preset rule and based on the network element configuration file, where the preset rule further includes a third rule and a fourth rule, the third rule is used to extract a third configuration object from the network element configuration file, the fourth rule includes a connection relationship between attributes of the third configuration object, and the second configuration feature indicates a parameter attribute and/or a function attribute of the third configuration object.

Similarly, in a specific implementation, for the third rule, refer to the description of the extraction rule in step S202 in FIG. 2, and for the fourth rule, refer to the description of the feature construction rule in step S203 in FIG. 2. The third configuration object may be an object in the plurality of configuration objects in step S202 in FIG. 2. The second configuration feature may be a feature in the plurality of configuration features in step S203 in FIG. 2. Specifically, for specific implementations of steps S301 and S302, refer to corresponding descriptions in steps S201, S202, and S203 in FIG. 2. Details are not described herein again.

In conclusion, in this application, for a given preset rule, a to-be-detected configuration object is obtained from the network element configuration file, and then a configuration feature is constructed through the connection relationship between the configuration objects. The constructed configuration feature may be used to detect a configuration object that has an anomaly, to quickly detect a network implicit normative and logical configuration error, thereby reducing a network accident risk. In addition, in this application, a configuration feature of the configuration object is constructed based on the connection relationship to implement detection of a configuration anomaly. In addition to more accurately detecting whether content of the configuration object is abnormal, whether a parameter matching relationship between the configuration objects is abnormal may be further detected, that is, more comprehensive configuration anomaly detection may be implemented. In addition, the network configuration feature extraction method provided in this application can realize extraction of a configuration feature with relatively high network configuration consistency. For example, for networks in various networking forms such as an internet protocol radio access network (internet protocol radio access network, IPRAN), a packet transport network (packet transport network, PTN), or a data communication network (data communication network, DCN), configuration feature extraction may be implemented by using this application, and then configuration anomaly detection is performed based on the extracted configuration feature. It can be learned that an implementation of this application has relatively strong network adaptability and is applicable to a relatively wide scenario. In addition, compared with a solution in which check rules are manually formulated for various types of configurations in an existing implementation, this application does not need to pay a lot of program development and maintenance costs, thereby reducing implementation costs. In conclusion, in this application, the information about the configuration object of the network element can be obtained with a low cost and a high coverage, to implement efficient and accurate anomaly detection of the network configuration.

The foregoing mainly describes the network configuration feature extraction method provided in embodiments of this application. It may be understood that, to implement the foregoing functions, each device includes corresponding hardware structures and/or software modules for performing corresponding functions. With reference to units and steps in the examples described in embodiments disclosed in this application, this application can be implemented in a form of hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the device may be divided into function modules based on the foregoing method examples. For example, each function module may be obtained through division based on each corresponding function, or two or more functions may be integrated into one module. The integrated module may be implemented in a form of hardware, or may be implemented in a form of a software functional module. It should be noted that, in embodiments of this application, division into modules is an example, and is merely a logical function division. In an actual implementation, another division manner may be used.

In the case of dividing each function module corresponding to each function, FIG. 4 shows a specific schematic diagram of a logical structure of an apparatus. The apparatus may be the foregoing configuration detection apparatus, or may be a chip in the configuration detection apparatus, or may be a processing system in the configuration detection apparatus. The apparatus 400 includes a processing unit 401.

Specifically, the processing unit 401 is configured to obtain a first configuration feature according to a preset rule and based on a network element configuration file, where the preset rule includes a first rule and a second rule, the first rule is used to extract a first configuration object and a second configuration object from the network element configuration file, the second rule includes a connection relationship between the first configuration object and the second configuration object, and the first configuration feature indicates parameter attributes and/or function attributes of the first configuration object and the second configuration object.

In a specific implementation, the connection relationship includes a semantic connection relationship and/or a topology connection relationship.

In a specific implementation, the semantic connection relationship includes one or more of a reference relationship, a parameter matching relationship, a companion relationship, a logical operation matching relationship, a family commonality relationship, a collaboration relationship, and an inclusion relationship.

In a specific implementation, the first configuration feature includes values of the parameter attributes and/or quantities of function attributes of the first configuration object and the second configuration object.

In a specific implementation, the processing unit is further configured to:
obtain a second configuration feature according to the preset rule and based on the network element configuration file, where the preset rule further includes a third rule and a fourth rule, the third rule is used to extract a third configuration object from the network element configuration file, the fourth rule includes a connection relationship between attributes of the third configuration object, and the second configuration feature indicates a parameter attribute and/or a function attribute of the third configuration object.

In a specific implementation, the processing unit is further configured to:
obtain a plurality of configuration features according to the preset rule and based on the network element configuration file, where the plurality of configuration features include the first configuration feature; and
obtain a processing result based on the plurality of configuration features.

In a specific implementation, the processing unit is specifically configured to:
obtain a first anomaly detection result based on an anomaly detection model and the plurality of configuration features.

In a specific implementation, the processing unit is specifically configured to:
obtain a classification result based on the plurality of configuration features, where the classification result includes one or more feature types.

In a specific implementation, the processing unit is specifically configured to:
classify the plurality of configuration features based on one or more topology connection relationships included in the preset rule, to obtain the one or more feature types, where the one or more topology connection relationships include a topology connection relationship of a network element involved in the network element configuration file in a network, and configuration features of a same connection relationship in the one or more topology connection relationships belong to a same feature type.

In a specific implementation, the processing unit is specifically configured to:
classify the plurality of configuration features based on one or more semantic connection relationships included in the preset rule, to obtain the one or more feature types, where configuration features of a same connection relationship in the one or more semantic connection relationships belong to a same feature type.

In a specific implementation, the classification result includes a first feature type, and the processing unit is further configured to: after the obtaining a classification result based on the plurality of configuration features, determine, based on a threshold, whether a configuration object corresponding to a configuration feature included in the first feature type is abnormal, where that a quantity of configuration features included in the first feature type is less than the threshold indicates that the corresponding configuration object is abnormal, or that a quantity of configuration features included in the first feature type is greater than or equal to the threshold indicates that the corresponding configuration object is normal.

In a specific implementation, the processing unit is further configured to: after the obtaining a classification result based on the plurality of configuration features, separately perform anomaly detection based on configuration features of the one or more feature types in the classification result and an anomaly detection model, to obtain a second anomaly detection result.

In a specific implementation, the processing unit is further configured to:
generate a configuration template based on the first configuration object, the second configuration object, and the connection relationship between the first configuration object and the second configuration object.

In a specific implementation, the first configuration object and/or the second configuration object is a configuration object of the first network element; and the processing unit is further configured to:
obtain a second topology connection relationship, where the second topology connection relationship includes a topology connection relationship of a newly added network element in a target network, the target network is a network in which the network element involved in the network element configuration file is located, and the network element involved in the network element configuration file includes the first network element;
determine, based on the second topology connection relationship, that the newly added network element has a same function as the first network element; and
generate information about a configuration object of the newly added network element based on the configuration template.

For specific operations and beneficial effects of the units in the apparatus 400 shown in FIG. 4, refer to corresponding descriptions in FIG. 2 and the specific method embodiment of FIG. 2. Details are not described herein again.

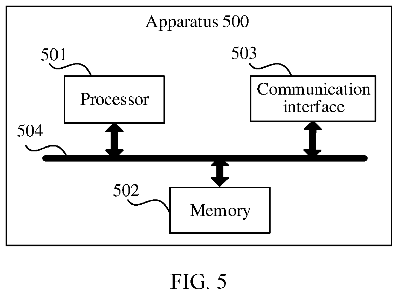

FIG. 5 is a schematic diagram of a specific hardware structure of an apparatus according to this application. The apparatus may be the configuration detection apparatus in the foregoing embodiment, or may be a chip in the configuration detection apparatus, or may be a processing system in the configuration detection apparatus, or the like. The apparatus 500 includes a processor 501, a memory 502, and a communication interface 503. The processor 501, the communication interface 503, and the memory 502 may be connected to each other or connected to each other through a bus 504.

For example, the memory 502 is configured to store a computer program and data of the apparatus 500. The memory 502 may include but is not limited to a random access memory (random access memory, RAM), a read-only memory (read-only memory, ROM), an erasable programmable read-only memory (erasable programmable read-only memory, EPROM), a compact read-only memory (compact disc read-only memory, CD-ROM), or the like.

The communication interface 503 includes a sending interface and a receiving interface. There may be a plurality of communication interfaces 503, which are configured to support the apparatus 500 in performing communication, for example, receiving or sending data or a message.

For example, the processor 501 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 501 may be configured to read the program stored in the memory 502, so that the apparatus 500 performs the network configuration anomaly detection method in FIG. 2 and the specific embodiment of FIG. 2. Alternatively, the processor 501 may be configured to read the program stored in the memory 502, so that the apparatus 500 performs the network configuration feature extraction method described in FIG. 3 and the specific embodiment of FIG. 3.

In a specific implementation, the processor 501 may be configured to read a program stored in the memory 502, to perform the following operations: obtaining a first configuration feature according to a preset rule and based on a network element configuration file, where the preset rule includes a first rule and a second rule, the first rule is used to extract a first configuration object and a second configuration object from the network element configuration file, the second rule includes a connection relationship between the first configuration object and the second configuration object, and the first configuration feature indicates parameter attributes and/or function attributes of the first configuration object and the second configuration object.

For specific operations and beneficial effects of the units in the apparatus 500 shown in FIG. 5, refer to corresponding descriptions in FIG. 2 and the specific method embodiment of FIG. 2, or refer to corresponding descriptions in FIG. 3 and the specific method embodiment of FIG. 3. Details are not described herein again.

An embodiment of this application further provides a computer-readable storage medium. The computer-readable storage medium stores a computer program, and the computer program is executed by a processor to implement the method in any one of the foregoing method embodiments of FIG. 2 and the specific method embodiments of FIG. 2.

An embodiment of this application further provides a computer-readable storage medium. The computer-readable storage medium stores a computer program, and the computer program is executed by a processor to implement the method in any one of the foregoing method embodiments of FIG. 3 and the specific method embodiments of FIG. 3.

An embodiment of this application further provides a computer program product. When the computer program product is read and executed by a computer, the method described in any one of the foregoing method embodiments of FIG. 2 and the specific method embodiments of FIG. 2 is implemented.

An embodiment of this application further provides a computer program product. When the computer program product is read and executed by a computer, the method described in any one of the foregoing method embodiments of FIG. 3 and the specific method embodiments of FIG. 3 is implemented.

In conclusion, in this application, for a given preset rule, a to-be-detected configuration object is obtained from the network element configuration file, and then a configuration feature is constructed through the connection relationship between the configuration objects. The constructed configuration feature may be used to detect a configuration object that has an anomaly, to quickly detect a network implicit normative and logical configuration error, thereby reducing a network accident risk. In addition, in this application, a configuration feature of the configuration object is constructed based on the connection relationship to implement detection of a configuration anomaly. In addition to more accurately detecting whether content of the configuration object is abnormal, whether a parameter matching relationship between the configuration objects is abnormal may be further detected, that is, more comprehensive configuration anomaly detection may be implemented. In addition, the network configuration feature extraction method provided in this application can realize extraction of a configuration feature with relatively high network configuration consistency. For example, for networks in various networking forms such as an internet protocol radio access network (internet protocol radio access network, IPRAN), a packet transport network (packet transport network, PTN), or a data communication network (data communication network, DCN), configuration feature extraction may be implemented by using this application, and then configuration anomaly detection is performed based on the extracted configuration feature. It can be learned that an implementation of this application has relatively strong network adaptability and is applicable to a relatively wide scenario. In addition, compared with a solution in which check rules are manually formulated for various types of configurations in an existing implementation, this application does not need to pay a lot of program development and maintenance costs, thereby reducing implementation costs. In conclusion, in this application, the information about the configuration object of the network element can be obtained with a low cost and a high coverage, to implement efficient and accurate anomaly detection of the network configuration.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A network configuration feature extraction method, wherein the method comprises:
obtaining a first configuration feature according to a preset rule and based on a network element configuration file, wherein the preset rule comprises a first rule and a second rule, the first rule is used to extract a first configuration object and a second configuration object from the network element configuration file, the second rule comprises a connection relationship between the first configuration object and the second configuration object, and the first configuration feature indicates parameter attributes and/or function attributes of the first configuration object and the second configuration object.

2. The method according to claim 1, wherein the connection relationship comprises a semantic connection relationship and/or a topology connection relationship.

3. The method according to claim 2, wherein the semantic connection relationship comprises one or more of a reference relationship, a parameter matching relationship, a companion relationship, a logical operation matching relationship, a family commonality relationship, a collaboration relationship, and an inclusion relationship.

4. The method according to any one of claims 1 to 3, wherein the first configuration feature comprises values of the parameter attributes and/or quantities of function attributes of the first configuration object and the second configuration object.

5. The method according to any one of claims 1 to 4, wherein the method further comprises:
obtaining a second configuration feature according to the preset rule and based on the network element configuration file, wherein the preset rule further comprises a third rule and a fourth rule, the third rule is used to extract a third configuration obj ect from the network element configuration file, the fourth rule comprises a connection relationship between attributes of the third configuration object, and the second configuration feature indicates a parameter attribute and/or a function attribute of the third configuration object.

6. The method according to any one of claims 1 to 5, wherein the method further comprises:
obtaining a plurality of configuration features according to the preset rule and based on the network element configuration file, wherein the plurality of configuration features comprise the first configuration feature; and
obtaining a processing result based on the plurality of configuration features.

7. The method according to claim 6, wherein the obtaining a processing result based on the plurality of configuration features comprises:
obtaining a first anomaly detection result based on an anomaly detection model and the plurality of configuration features.

8. The method according to claim 6, wherein the obtaining a processing result based on the plurality of configuration features comprises:
obtaining a classification result based on the plurality of configuration features, wherein the classification result comprises one or more feature types.

9. The method according to claim 8, wherein the obtaining a classification result based on the plurality of configuration features comprises:
classifying the plurality of configuration features based on one or more topology connection relationships comprised in the preset rule, to obtain the one or more feature types, wherein the one or more topology connection relationships comprise a topology connection relationship of a network element involved in the network element configuration file in a network, and configuration features of a same connection relationship in the one or more topology connection relationships belong to a same feature type.

10. The method according to claim 8, wherein the obtaining a classification result based on the plurality of configuration features comprises:
classifying the plurality of configuration features based on one or more semantic connection relationships comprised in the preset rule, to obtain the one or more feature types, wherein configuration features of a same connection relationship in the one or more semantic connection relationships belong to a same feature type.

11. The method according to any one of claims 8 to 10, wherein the classification result comprises a first feature type, and after the obtaining a classification result based on the plurality of configuration features, the method further comprises:
determining, based on a threshold, whether a configuration object corresponding to a configuration feature comprised in the first feature type is abnormal, wherein that a quantity of configuration features comprised in the first feature type is less than the threshold indicates that the corresponding configuration object is abnormal, or that a quantity of configuration features comprised in the first feature type is greater than or equal to the threshold indicates that the corresponding configuration object is normal.

12. The method according to any one of claims 8 to 11, wherein after the obtaining a classification result based on the plurality of configuration features, the method further comprises:
separately performing anomaly detection based on configuration features of the one or more feature types in the classification result and an anomaly detection model, to obtain a second anomaly detection result.

13. The method according to any one of claims 1 to 12, wherein the method further comprises:
generating a configuration template based on the first configuration object, the second configuration object, and the connection relationship between the first configuration object and the second configuration object.

14. The method according to claim 13, wherein the first configuration object and/or the second configuration object is a configuration object of a first network element, and the method further comprises:
obtaining a second topology connection relationship, wherein the second topology connection relationship comprises a topology connection relationship of a newly added network element in a target network, the target network is a network in which the network element involved in the network element configuration file is located, and the network element involved in the network element configuration file comprises the first network element;
determining, based on the second topology connection relationship, that the newly added network element has a same function as the first network element; and
generating information about a configuration object of the newly added network element based on the configuration template.

15. A network configuration feature extraction apparatus, wherein the apparatus comprises:
a processing unit, configured to obtain a first configuration feature according to a preset rule and based on a network element configuration file, wherein the preset rule comprises a first rule and a second rule, the first rule is used to extract a first configuration object and a second configuration object from the network element configuration file, the second rule comprises a connection relationship between the first configuration object and the second configuration object, and the first configuration feature indicates parameter attributes and/or function attributes of the first configuration object and the second configuration object.

16. The apparatus according to claim 15, wherein the connection relationship comprises a semantic connection relationship and/or a topology connection relationship.

17. The apparatus according to claim 16, wherein the semantic connection relationship comprises one or more of a reference relationship, a parameter matching relationship, a companion relationship, a logical operation matching relationship, a family commonality relationship, a collaboration relationship, and an inclusion relationship.

18. The apparatus according to any one of claims 15 to 17, wherein the first configuration feature comprises values of the parameter attributes and/or quantities of function attributes of the first configuration object and the second configuration object.

19. The apparatus according to any one of claims 15 to 18, wherein the processing unit is further configured to:
obtain a second configuration feature according to the preset rule and based on the network element configuration file, wherein the preset rule further comprises a third rule and a fourth rule, the third rule is used to extract a third configuration object from the network element configuration file, the fourth rule comprises a connection relationship between attributes of the third configuration object, and the second configuration feature indicates a parameter attribute and/or a function attribute of the third configuration object.

20. The apparatus according to any one of claims 15 to 19, wherein the processing unit is further configured to:
obtain a plurality of configuration features according to the preset rule and based on the network element configuration file, wherein the plurality of configuration features comprise the first configuration feature; and
obtain a processing result based on the plurality of configuration features.

21. The apparatus according to claim 20, wherein the processing unit is specifically configured to:
obtain a first anomaly detection result based on an anomaly detection model and the plurality of configuration features.

22. The apparatus according to claim 20, wherein the processing unit is specifically configured to:
obtain a classification result based on the plurality of configuration features, wherein the classification result comprises one or more feature types.

23. The apparatus according to claim 22, wherein the processing unit is specifically configured to:
classify the plurality of configuration features based on one or more topology connection relationships comprised in the preset rule, to obtain the one or more feature types, wherein the one or more topology connection relationships comprise a topology connection relationship of a network element involved in the network element configuration file in a network, and configuration features of a same connection relationship in the one or more topology connection relationships belong to a same feature type.

24. The apparatus according to claim 22, wherein the processing unit is specifically configured to:
classify the plurality of configuration features based on one or more semantic connection relationships comprised in the preset rule, to obtain the one or more feature types, wherein configuration features of a same connection relationship in the one or more semantic connection relationships belong to a same feature type.

25. The apparatus according to any one of claims 22 to 24, wherein the classification result comprises a first feature type, and the processing unit is further configured to: after the obtaining a classification result based on the plurality of configuration features, determine, based on a threshold, whether a configuration object corresponding to a configuration feature comprised in the first feature type is abnormal, wherein that a quantity of configuration features comprised in the first feature type is less than the threshold indicates that the corresponding configuration object is abnormal, or that a quantity of configuration features comprised in the first feature type is greater than or equal to the threshold indicates that the corresponding configuration object is normal.

26. The apparatus according to any one of claims 22 to 25, wherein the processing unit is further configured to: after the obtaining a classification result based on the plurality of configuration features, separately perform anomaly detection based on configuration features of the one or more feature types in the classification result and an anomaly detection model, to obtain a second anomaly detection result.

27. The apparatus according to any one of claims 15 to 26, wherein the processing unit is further configured to:
generate a configuration template based on the first configuration object, the second configuration object, and the connection relationship between the first configuration object and the second configuration object.

28. The apparatus according to claim 27, wherein the first configuration object and/or the second configuration object is a configuration object of a first network element; and the processing unit is further configured to:
obtain a second topology connection relationship, wherein the second topology connection relationship comprises a topology connection relationship of a newly added network element in a target network, the target network is a network in which the network element involved in the network element configuration file is located, and the network element involved in the network element configuration file comprises the first network element;
determine, based on the second topology connection relationship, that the newly added network element has a same function as the first network element; and
generate information about a configuration object of the newly added network element based on the configuration template.

29. An apparatus, comprising a processor and a memory, wherein the memory is configured to store a computer program, and the processor is configured to invoke the computer program, the apparatus is enabled to perform the method according to any one of claims 1 to 14.

30. A computer-readable storage medium, wherein the computer-readable storage medium stores a computer program, and when the computer program is executed by a processor, the method according to any one of claims 1 to 14 is implemented.

31. A computer program product, comprising a computer program, wherein when the computer program is executed by a processor, the method according to any one of claims 1 to 14 is implemented.
